# EUROPEAN PATENT SPECIFICATION

(11) **EP 2 522 537 B1**
(45) Date of publication and mention of the grant of the patent: **20.08.2014**
(21) Application number: 11165919.9
(22) Date of filing: 12.05.2011
(51) Int. Cl.: B60J 5/06, B60J 5/04, B60P 7/135

(54) **Side panel construction for a curtain sided transport vehicle and method for loading/unloading**
Spriegel für ein LKW mit Seitenplane und Verfahren zum Be-/Entladen
Barre/Panel de chargement pour un camion avec une bâche latérale et méthode de chargement

(43) Date of publication of application: 14.11.2012
(73) Proprietor: Vos Logistics Oss B.V., 5347 KS Oss (NL)
(72) Inventor: Van Schaijk, Johannes Arnoldus Wilhelmus Antonius, 5347 KS, Oss (NL)
(74) Representative: Algemeen Octrooi- en Merkenbureau B.V.

(56) References cited:
- EP-A1- 0 661 191
- EP-A2- 0 272 454
- EP-A2- 1 431 115
- WO-A1-84/03667
- DE-A1- 4 237 410
- US-A- 3 590 746

## Description

### FIELD OF THE INVENTION

The invention relates to a side panel for a curtain sided transport vehicle, as known from prior art document DE 42 37 410 A1. The invention also relates to a curtain sided transport vehicle adapted to receive such a side panel. The invention further relates to a method of loading or unloading such a transport vehicle.

### BACKGROUND OF THE INVENTION

Two common types of transport vehicles such as trucks, trailers and semitrailers, are the closed box type and the curtain sided type, also known as tautliner or curtain sider. Closed box transport vehicles have rigid weather sealed walls, fully enclosing the load, and a rear door for loading and unloading. Curtain siders have curtain side walls that can be folded away for easy loading and unloading from the sides, for instance using fork lifts. Curtain sided trailers typically have a horizontal floor for carrying load, provided with vertical poles positioned the sides of the floor to support the roof of the trailer. Similar to closed transport vehicles, the curtain siders usually also have a rear door which may also be used for loading and unloading. In order to protect the load from weather influences, the sides of the semi-trailer may be covered with a sheet material, which may be arranged as a horizontally or vertically displaceable curtain. The curtain, typically made of PVC vinyl or canvas, spans the sides, or multiple overlapping curtains may be used to span parts of the sides. Curtain rollers enable vertical curtains, whereas rails may enable horizontal curtains. During transport, the curtains are secured using curtain tensioners. The curtain sides may have reinforcements such as metal or plastic strips, in order to control the shape of the curtain side with respect to air fluctuations due to wind and/or vehicle speed.

Closed transport vehicles have the advantage over curtain siders that their side walls are rigid, and are better at controlling the position loose items transport. In contrast, loose items in curtain siders may be pushed against the curtain walls during transport, and may shift outside the limits of the load floors. This may lead to load bulging outside of the limits of the loading floor, damage to the curtain and potentially invokes traffic hazards. Another disadvantage of curtain sided trailers is that the curtain walls may be easily cut with a knife, increasing the risk for theft. However, curtain sided transport vehicles offer more flexible loading and unloading options. Whereas closed transport vehicles usually may only be loaded and unloaded through the limited opening provided by the back doors, curtain sided transport vehicles may be unloaded from all sides, and for vehicle types with removable roofs, also from the top.

### OBJECT AND SUMMARY OF THE INVENTION

It is an object of the invention to provide improved load control for a curtain sided transport vehicle. It is another object of the invention to improve the security against theft for a curtain sided transport vehicle.

The invention provides a side panel construction for a curtain sided transport vehicle, comprising a panel suitable for fixing the panel between two adjacent posts of the transport vehicle, wherein the panel has a weight of less than 25 kilogram, wherein the panel has a weight of less than 25 kilogram. The side panel placed between adjacent posts placed between adjacent posts on a trailer provides additional mechanical strength to contain the load within the boundaries of the floor of the trailer. The panel may is preferably provided with coupling means at opposite sides of the panel for coupling the panel between two adjacent posts of a curtain sided transport vehicle. The panel also protects the curtain from being damaged by the load from the inside, and in addition provides an additional obstacle for thieves attempting to gain access to the load from the outside. Due to the low weight, the panels may be placed and removed by a single person. Preferably, the load is under 20 kilograms, most preferably under 15 kilograms. Preferably, the panels may be placed and removed from the outside of the transport vehicle.

According to the invention the panel is dimensioned or shaped to leave a gripping space between a side of the panel and the post of the curtain sided transport vehicle. This makes it relatively easy to place or remove the panel manually. The presence of the gripping space may provide an opening for weather or other external influences, but in general this is no disadvantage in a curtain sided transport vehicle, as the curtain will be placed around the sides to provide sufficient weather protection.

Preferably, the gripping space is defined by recesses provided at vertical sides of the panel. Recesses in the vertical sides provide an easy grip and do not take space. The recesses may also be arranged to cooperate with coupling means provided at the posts of a transport vehicle.

In a preferred embodiment, the panel is essentially made of a lightweight sandwich material. Sandwich materials combine a light weight per area with good mechanical strength to withstand forces perpendicular to the surface of the panel. Examples of sandwich materials include honeycomb structures. The sandwich structures may be made of plastics, metal, cardboard and/or wood, or combinations thereof. Preferably, the panel is made essentially of a single material, as this makes the panel easier to recycle. The layers in the sandwich structure may be coupled by welding, adhesives, mechanical coupling or combinations thereof.

It is preferred if the sandwich material comprises an inner sheet and an outer sheet separated by an air gap, wherein the inner and outer sheets connected by bridging elements arranged in the air gap. The presence of an air gap allows for a relatively low weight, and provides a buffer zone against impact. Preferably, the air gap is a continuous air gap.

Preferably, the bridging elements are formed out of a three-dimensionally shaped sheet layer. Such materials are relatively easy to process, offer excellent mechanical strength and a relatively light weight.

Most preferably, the bridging elements comprise a dimpled structure. Such structures are capable of withstanding impacts and strain from various directions, and also allow for a continuous air gap which prevents the buildup of pressure in the material under strain or deformation. Dimpled structures are preferably made out of a sheet material.

Preferably, the panel has a density per area under 3500 g/m², preferably from 1000 to 3000 g/m². Such panels, when sized according to trailer dimensions, are relatively easy to handle while still providing sufficient mechanical strength.

It is advantageous if the panel has an area of less than 7 m², preferably less than 5 m² Such a panel may still be handled by a single person, even if some wind force is present. The panels may be made even less prone to wind force by providing apertures in the panel.

It is preferred if the panel has a thickness of at least 5 mm, preferably from 8 to 12 mm, most preferably 10 mm.
Such a thickness is relatively easy to grab manually while still providing sufficient mechanical strength.

It is preferred if the panel is essentially made of a thermoplastic sheet material. Thermoplastic sheet materials are relatively easy to process and arrange into the desired shape and dimensions, using cutting, sawing, welding and adhesives.

More preferably, the thermoplastic material is selected from polyethylene, polypropylene, polystyrene, or copolymers thereof, preferably polypropylene. These materials were shown to offer excellent physical properties. Polypropylene is preferred as has excellent properties, in particular with regard to stiffness and wear resistance and is also easily recycled.

In a preferred embodiment, at least a bottom side of the panel is provided with at least one reinforcing element. This reinforcement decreases wear of the panel during use, during use and in particular during placement and removal on a transport vehicle, when the panel is prone to hitting the ground and/or the floor surface.

In a preferred embodiment, the panel is provided with coupling means at opposite sides of the panel, wherein the coupling means comprise a horizontal bar attached to the panel, wherein the distal end of the bar extends past the vertical sides of the panel. This offers a relatively simple way to attach the panel to posts provided with corresponding slots or apertures.

Most preferably, the coupling means comprise an upper horizontal bar and a lower horizontal bar, wherein the lower bar is located near the lower section of the panel and the upper bar is located at an upper section of the panel. Attaching the panel at four positions on the opposite sides of the panel will provide a very stable attachment.

The invention further provides a curtain sided transport vehicle, comprising a horizontal floor for carrying load, and vertical posts positioned the sides of the floor provided with attaching means for attaching side panels as described herein, and a removable sheet material arranged to cover at least the sides of the transport vehicle in a closed position. The side panels may be arranged between at least part of the adjacent posts, and wherein the removable sheet material is arranged to cover the posts and the side panels.

It is preferred if the post are provided with guides for sliding a side panel towards a predetermined position. This makes it easier and faster to place the side panels into the predetermined position. It also makes it easier to place the panels by a single person. Guides may for instance be guides placed along at least part of the post, preferably on the inner side to make it possible to place and remove the panels from the outside by sliding the panel upwards from the ground.
In a preferred embodiment, the attaching means comprise essentially U-shaped slots suitable for fitting a horizontal bar or vertical sides of the panel. The U-shaped slots are relatively simple and easy to arrange, also on existing trailer posts. Preferably, the slots are located in the space between the posts rather than on the inner side or outer side with respect to the cargo space. This would allow relatively easy access and placement or removal from both the inside or the outside of the trailer. In contrast, having the slots on the inside or outside would favour removal from one side but would make removal from the opposite side more cumbersome. Have the slots for the panels on the outside would also be preferred, as this would at least allow easy removal of the panels from the outside, providing for easy access with forklifts to unload a fully loaded trailer. In a preferred embodiment, the U-shaped slots are made out of guide means as described herein.

It is advantageous if the attaching means are arranged to leave a vertical space of at least 15cm, preferably at least 25 cm, between a lower bottom of the side cover and the horizontal floor. This makes it easier to lift the side cover from the attaching means manually or by lifting equipment. The space also helps in circumventing damage to the panels by lifting equipment frequently used in loading and unloading, such as fork lifts and pallet lifts. Such equipment has a fork part, operated at a close distance to the floor of the transport vehicle. If the panel would extend towards the floor, the extended parts may damage the lower bottom of the panels. Further, the opening also enables easy cleaning out of the transport vehicle even if the panels are still attached.

The invention also provides a method for stabilizing load in a curtain sided transport vehicle, comprising the steps: providing a curtain sided transport vehicle, having a horizontal floor for carrying load, and vertical posts positioned the sides of the floor, loading or unloading articles onto the floor, attaching side panels as described herein between adjacent posts, and covering at least the vertical posts and side panels attached to the posts with a removable sheet material.

### BRIEF DESCRIPTION OF THE DRAWINGS

The invention will now be further elucidated by the following non-restrictive examples, according to Figures 1 - 4.
Figures 1a-c shows a panel according to the invention.
Figure 2 shows a panel attached to posts in a trailer.
Figure 3 shows a panel in use in a loaded trailer.
Figure 4 shows a transport vehicle with a panel according to the invention attached.
Figure 5, 6 and figure 7 show alternative panels according to the invention.

### DESCRIPTION OF PREFERRED EMBODIMENTS

The panels showed herein are for use in a curtain sided transport vehicle, and may be applied in various vehicles including trucks, trailers and semitrailers.

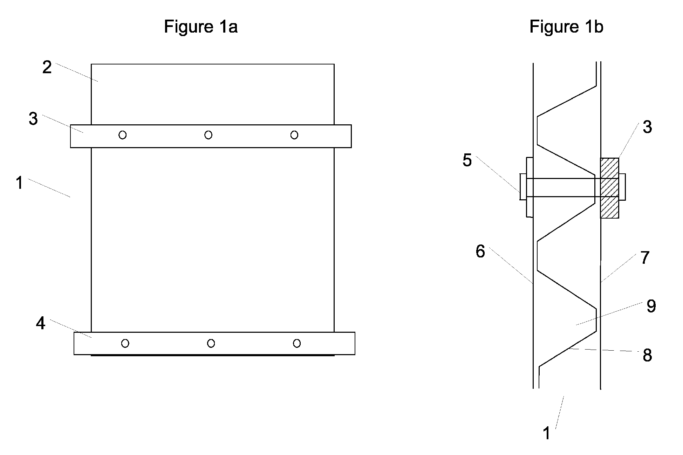

Figure 1a shows a side panel 1 comprising a panel 2 provided with an upper bar 3 and a lower bar 4 for attaching the panel in slots provided at the posts of a trailer. The bars 3, 4 are attached to the panel with bolts 5. The panel is made of a lightweight sandwich material and weights approximately 16 kilos in total. The density per area of the panel is approximately 1500 g/m², and the thickness of the panel is 10 mm. This makes the panel easy to handle manually by a single person. The lower bar 4 is located at the bottom of the panel, and doubles as a reinforcing element for protecting the lower edge of the panel during placement or removal.

Figure 1b shows a detail of the panel 1 in a side view. It clearly shows the sandwich structure, comprising 2 outer layers 6, 7 which enclose a space 9. The outer layers 6, 7 are connected by a middle layer 8 which has a three dimensional form spanning the space 9. The layers 6, 7, 8 are made of thermoplastic polypropylene, and are welded together. The sandwich panel 1 combines a good mechanical strength and durability. In this example, a dimpled structure is used, but materials using other three dimensional structures for the middle layer, such as honeycomb panels, may also be used.

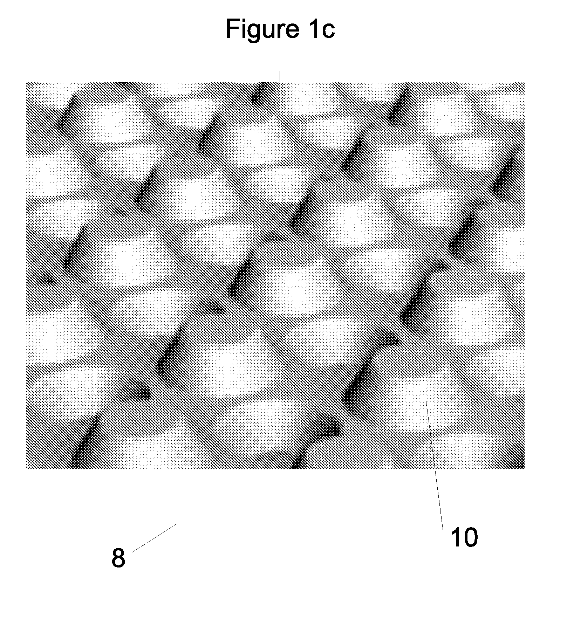

Figure 1c shows the three dimensional dimpled structure of the middle layer 8 shown in figure 1b in more detail. The layer is made from a polypropylene sheet and comprises alternating frustoconical dimples 10 alternatively protruding upward and downward.

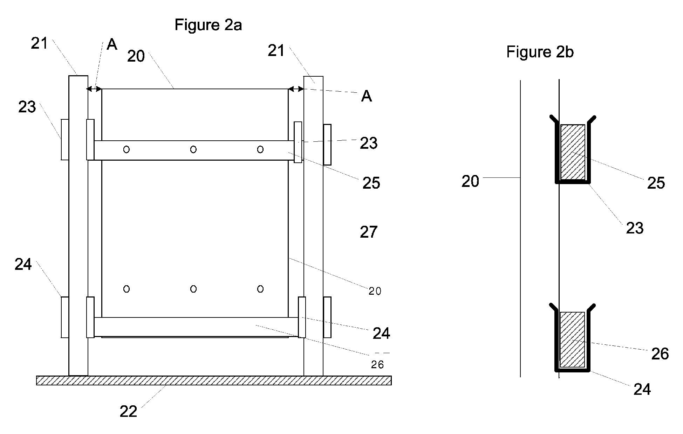

Figure 2a shows a side panel 20 which is attached to posts 21 that are based on the side of the floor 22 of a trailer. Figure 2b shows details of figure 2a in a side view. Each post 21 is provided with an upper slot 23 and a lower slot 24 on both sides of the post. The upper bar 25 of the panel 20 slots into the upper slots 23 of two adjacent posts, whereas the lower bar 26 slots into the corresponding lower slots 24. The attachment at four different positions at both sides of the panel 20 gives a very stable configuration. In this example, U-shaped slots are used, but other receiving profiles may also be used. The slots are provided with a seeking edge to make it easier to properly place the bars into the slots. The dimensions of the panel 20 were selected to leave a space A at between the side of the panel 20 and the post 21 of approximately 10-20 centimetres. At the lower side of the panel, a gap of approximately 25 centimetres is left open. The distance prevents accidental damage by loading equipment such as fork lifts and pallet lifts. It also provides space for gripping the panel manually from the lower side, and exit for sweeping out material if the trailer is cleaned with the attached panels. This gripping space 27 allows for the easy manual removal of the panel. A curtain will be attached over the posts and the panels 20 during use, so the gripping space 27 left open will not compromise the safety of the load in the trailer. The width of the bars 23, 24 is smaller than the distance between two adjacent poles 21, allowing for easy removal of the panel 20 from either inside or outside of the trailer. As a side curtain will be applied over the posts and panels on the trailer.

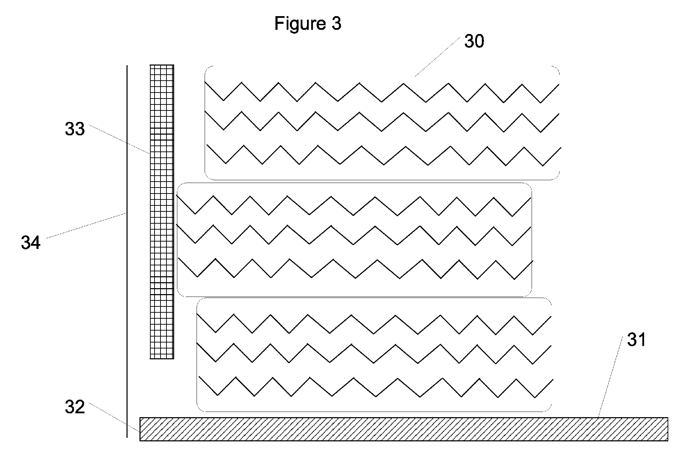

Figure 3 shows the use of the invention during transport in a trailer. A load prone to shifting during transport, a pile of tyres 30, is stacked on a trailer floor 31. At the side edge of the trailer floor 32, a panel 33 such as the panels described herein is positioned to contain the shifting load 30. There is a gap of approximately 25 centimetres between the bottom side of the panel 33 and the trailer floor 32. A curtain 34 is applied on the side of the transport vehicle, just like in a regular curtain sided trailer. The curtain 34 is made of a water-resistant material such as PVC vinyl in order to protect the load from external influences such as rain.

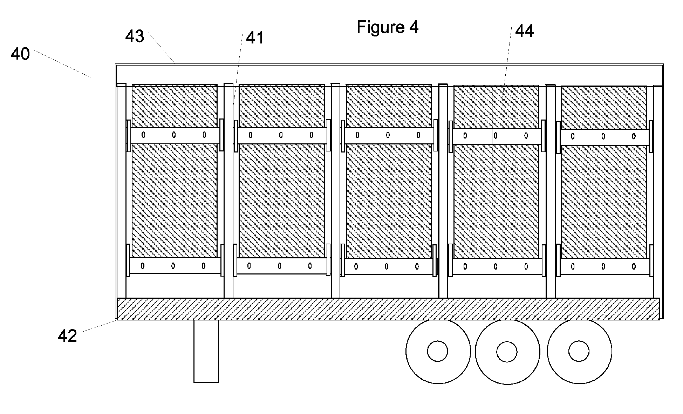

Figure 4 shows a trailer 40 having a number of posts 41 based on the floor 42 and supporting the roof 43 of the trailer. Between adjacent posts 41, panels 44 as described herein have been mounted. The side curtain covering the posts 41 and panels 44 during transport has been omitted for clarity.

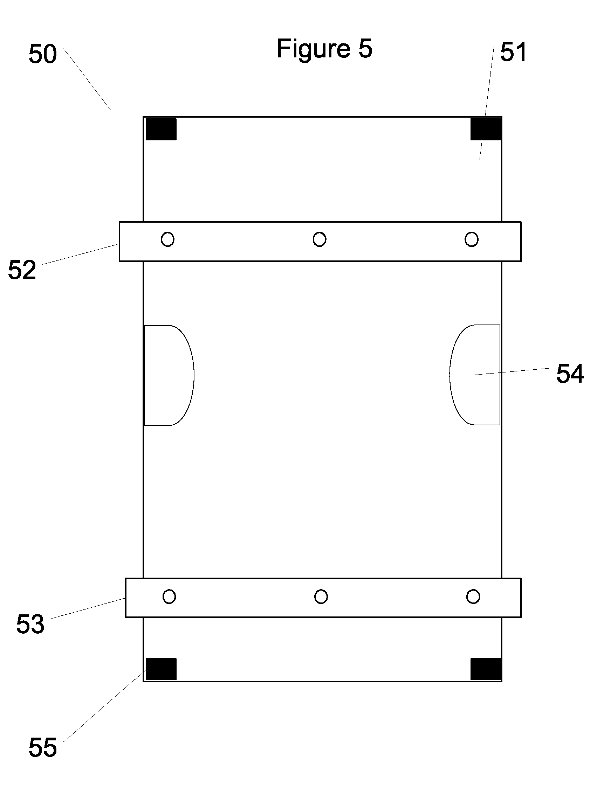

Figure 5 shows an alternative side panel 50 comprising a panel 51 provided with an upper bar 52 and a lower bar 53 for attaching the panel in slots provided at the posts of a trailer. In order to make the manual handling of the panel 50 easier, the sides of the panel are provided with cut-out recesses that may be used to grab and manipulate the panel 50. The recesses may also cooperate with coupling means provided at the posts of a transport vehicle, in addition to the bars. The corners of the panel 50 are reinforced with metal or plastic protectors 55.

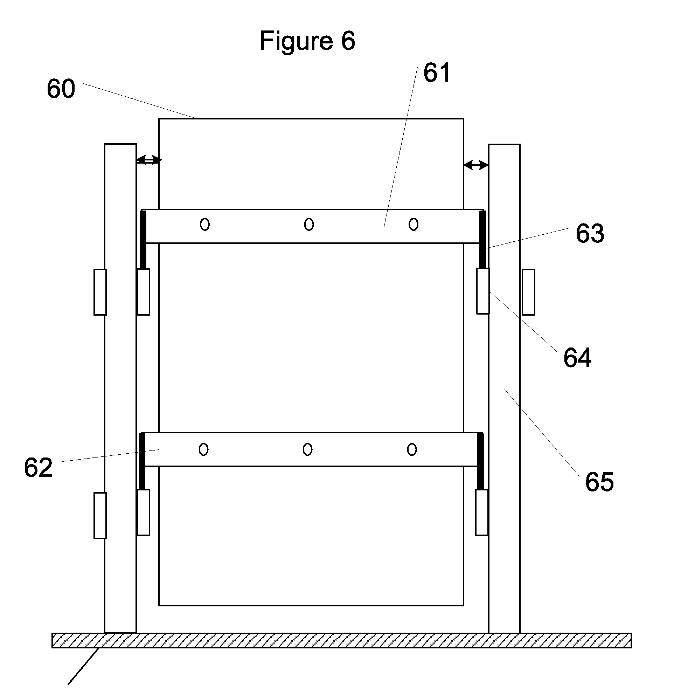

Figure 6 shows yet another alternative side panel 60 that is provided with carrier bars 61 and 62. The distal end of the bars are provided with pins 63 that fit into pockets 64 attached to the posts 65 of the trailer. This example illustrates that various coupling means may be used to attach panels to posts to achieve the advantages provided by the invention.

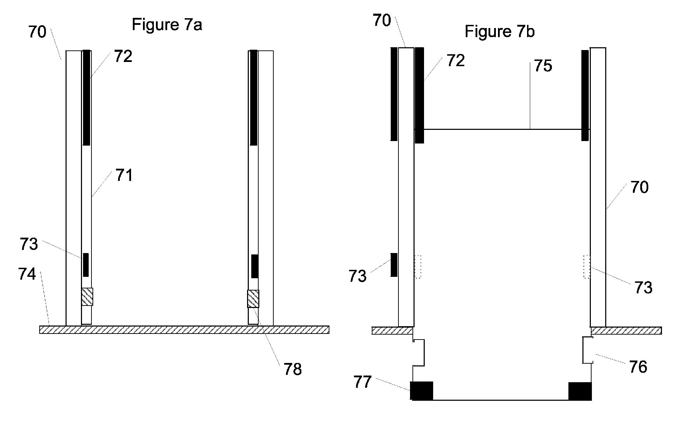

Figure 7a shows a part of a transport vehicle, wherein posts 70 are provided with a guide strip 71 extending over the length of the posts on the inner side of the transport vehicle, and a shorter guide 72 positioned at the top part of the post 70.

There inner guide 71 and the outer guide 72 are positioned at a distance of each other to accommodate a panel to be fixed between them. For instance, if the panel thickness would be 10mm, the distance between the guides may be 12 to 15mm to leave some tolerance for sliding the panel in between. On the lower side, the posts are also provided with fixing plates 73, arranged on the outer side of the posts, at a distance from the floor 74. The lower end of the post is also provided with a stop 78, which ensures a vertical gap is maintained between the bottom side of a panel 75 and the floor of the transport vehicle.

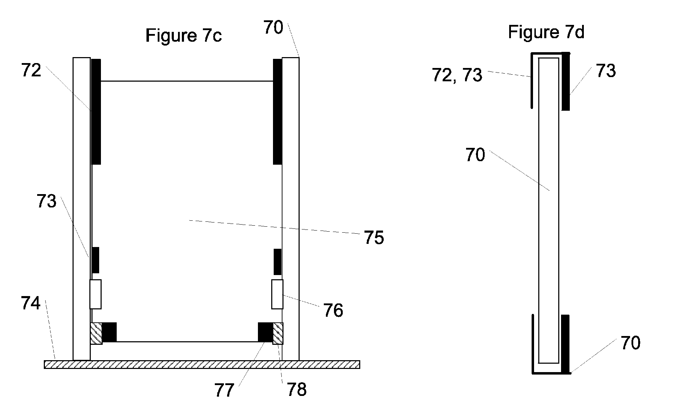

In figure 7b, a panel 75 is slid under an angle against the inner guide 71, in between the opening provided between the inner guide 71 and the outer guide 73. The panel is lifted upwards, until recesses 76 coincide with the fixing plates 73. The fixing plates 76 then pass through the recesses 76 and the panel 75 is lowered, until the lower side rests on the floor 74. Reinforced corners 77 protect the panel 75 from being damaged during placement, removal or during transport. As shown in figure 7c and 7d (top view), the panel 75 is locked between the inner guide 71 on the inner side of the panel, and the outer guide 72 and fixing plate 73 on the outer side of the panel, while resting on the floor 74. The posts 70 and the guides 71, 72 form U-shaped cavities for taking up the vertical sides of the panel 75.

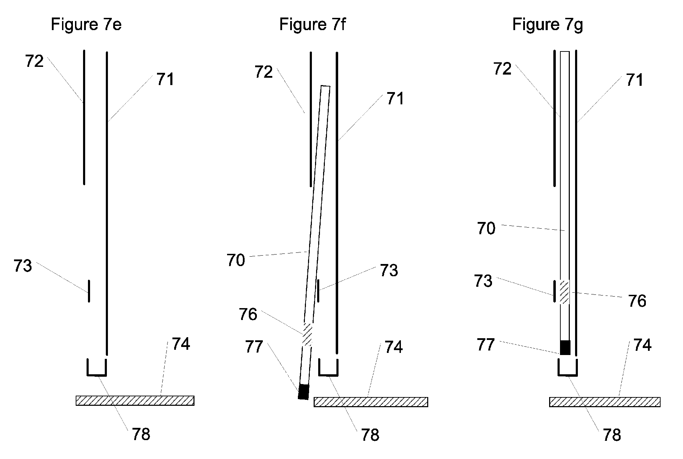

The process of placing or removing the panels is shown in figures 7e-7g in a side view. In figure 7f the panel 75 is slid upwards against the inner guide 71 and subsequently inserted between the cavity formed between the inner guide 71 and the outer guide 72. Figure 7g shows the recesses 76 of the panel 75 in an aligned position with the fixing plates 73, allowing the fixing plates to pass through the recesses 76. After that, the panel 75 is lowered towards the floor 74 to a locked position for transport, as shown in figures 7c and 7d. In the locked position, the reinforced corners 77 rest in the U-shaped stops 78 to leave a vertical gap of approximately 25 centimetres between the floor 74 and the lower side of the panel 70.

## Claims

1. Side panel construction (1) for a curtain sided transport vehicle, comprising a panel (2, 20, 33, 44, 51, 60, 75), the panel being provided with coupling means (3, 4, 25, 26, 52, 53, 61, 63) at opposite sides of the panel for releasably coupling the panel between two adjacent posts (21, 41, 65, 70) of the curtain sided transport vehicle, **characterized in that**
the panel has a weight of less than 25 kilogram,
wherein the panel is dimensioned or provided with recesses (27, 54, 76) to leave a gripping space between a side of the panel and the post of the curtain sided transport vehicle for manual placement or removal of the panel.

2. Side panel construction according to claim 1, wherein the gripping space is defined by recesses provided at vertical sides of the panel.

3. Side panel according to claim 1 or 2, wherein the panel is essentially made of a lightweight sandwich material (1, 6,7, 8, 10).

4. Side panel according to claim 3, wherein the sandwich material comprises an inner sheet (6) and an outer sheet (7) separated by an air gap, wherein the inner and outer sheets connected by bridging elements (8) arranged in the air gap.

5. Side panel according to claim 4, wherein the bridging elements comprise a dimpled structure (10).

6. Side panel according to any of the preceding claims, wherein the panel has a density under 3500 g/m², preferably from 1000 to 3000 g/m².

7. Side panel according to any of the preceding claims, wherein the panel has an area of less than 7 m2.

8. Side panel according to any of the preceding claims, wherein the panel has a thickness of at least 5 mm, preferably from 8 to 12 mm, most preferably 10 mm.

9. Side panel according to any of the preceding claims, wherein the panel is essentially made of a thermoplastic sheet material, preferably selected from polyethylene, polypropylene, polystyrene, or copolymers thereof, most preferably polypropylene.

10. Side panel according to any of the preceding claims, wherein at least a bottom side of the panel is provided with at least one reinforcing element (55, 77).

11. Curtain sided transport vehicle (40) adapted to use a side panel (1) according to any of the preceding claims, comprising
A horizontal floor (22, 31, 42, 74) for carrying load,
vertical posts (21, 41, 65, 70) positioned on the sides of the floor provided with attaching means for attaching side panels (2, 20, 33, 44, 51, 60, 75) according to any of the preceding claims, and
a removable sheet material (34) arranged to cover at least the sides of the curtain sided transport vehicle in a closed position,
wherein the distance between adjacent vertical posts is adapted to the width of the panel,
wherein the panel is dimensioned or provided with recesses (27, 54, 73) to leave a gripping space between a side of the panel and the post of the curtain sided transport vehicle for manual placement or removal of the panel..

12. Curtain sided transport vehicle according to claim 11, wherein the post are provided with guides (71, 72, 73) for sliding a side panel towards a predetermined position.

13. Curtain sided transport vehicle according to claim 11 or 12, wherein the attaching means comprise essentially U-shaped slots (23, 24) suitable for fitting a horizontal bar or a vertical side of a side cover.

14. Curtain sided transport vehicle according to any of the claims, wherein the attaching means are arranged to leave a vertical space of at least 15cm, preferably at least 25 cm, between a lower bottom of the side panel and the horizontal floor.

15. Method for loading or unloading a curtain sided transport vehicle (40) according to any of the claims 11-14, comprising the steps:
- providing a curtain sided transport vehicle (40), having a horizontal floor (22, 31, 42, 74) for carrying load, and vertical posts positioned the sides of the floor,
- loading or unloading articles onto the floor,
- attaching one or more side panels (2, 20, 33, 44, 51, 60, 75) according to any of the preceding claims 1-10 between adjacent posts, and
covering at least the vertical posts (21, 41, 65, 70) and side panels attached to the posts with a removable sheet material (34),
wherein the distance between adjacent vertical posts is adapted to the width of the panel,
wherein the panel is dimensioned or provided with recesses (27, 54, 73) to leave a gripping space between a side of the panel and the post of the curtain sided transport vehicle for manual placement or removal of the panel.

## Patentansprüche

1. Seitenpaneelkonstruktion (1) für ein mit Seitenplane versehenes Transportfahrzeug, mit einem Paneel (2, 20, 33, 44, 51, 60, 75), wobei das Paneel mit Kopplungseinrichtungen (3, 4, 25, 26, 52, 53, 61, 63) an gegenüberliegenden Seiten des Paneels zur lösbaren Kopplung des Paneels zwischen zwei benachbarten Pfosten (21, 41, 65, 70) des mit Seitenplane versehenen Transportfahrzeugs versehen ist, **dadurch gekennzeichnet, dass**
das Paneel ein Gewicht von weniger als 25 Kilogramm hat,
wobei das Paneel so dimensioniert oder mit Aussparungen (27, 54, 76) versehen ist, dass zum manuellen Platzieren oder Entfernen des Paneels ein Greifraum zwischen einer Seite des Paneels und dem Pfosten des mit Seitenplane versehenen Transportfahrzeugs gelassen ist.

2. Seitenpaneelkonstruktion nach Anspruch 1, wobei der Greifraum durch Aussparungen gebildet ist, die an vertikalen Seiten des Paneels vorgesehen sind.

3. Seitenpaneel nach Anspruch 1 oder 2, wobei das Paneel im Wesentlichen aus einem Leichtverbundwerkstoff (1, 6, 7, 8, 10) besteht.

4. Seitenpaneel nach Anspruch 3, wobei der Verbundwerkstoff eine Innenplatte (6) und eine Außenplatte (7) umfasst, die durch einen Luftspalt getrennt sind, wobei die Innen- und die Außenplatte durch in dem Luftspalt angeordnete Überbrückungselemente (8) verbunden sind.

5. Seitenpaneel nach Anspruch 4, wobei die Überbrückungselemente eine Grübchenstruktur (10) aufweisen.

6. Seitenpaneel nach einem der vorhergehenden Ansprüche, wobei das Paneel eine Dichte von unter 3500 g/m², vorzugsweise von 1000 bis 3000 g/m² hat.

7. Seitenpaneel nach einem der vorhergehenden Ansprüche, wobei das Paneel eine Fläche von weniger als 7 m² hat.

8. Seitenpaneel nach einem der vorhergehenden Ansprüche, wobei das Paneel eine Dicke von mindestens 5 mm, vorzugsweise von 8 bis 12 mm, am bevorzugtesten 10 mm hat.

9. Seitenpaneel nach einem der vorhergehenden Ansprüche, wobei das Paneel im Wesentlichen aus einem thermoplastischen Plattenwerkstoff besteht, der vorzugsweise aus Polyethylen, Polypropylen, Polystyrol oder deren Copolymeren ausgewählt ist, am bevorzugtesten Polypropylen.

10. Seitenpaneel nach einem der vorhergehenden Ansprüche, wobei wenigstens eine Unterseite des Paneels mit wenigstens einem Verstärkungselement (55, 77) versehen ist.

11. Mit Seitenplane versehenes Transportfahrzeug (40), das zur Verwendung eines Seitenpaneels (1) nach einem der vorhergehenden Ansprüche eingerichtet ist, mit
einem horizontalen Boden (22, 31, 42, 74) zum Tragen von Last,
vertikalen Pfosten (21, 41, 65, 70), die an den Seiten des Bodens positioniert und mit Befestigungseinrichtungen zur Befestigung von Seitenpaneelen (2, 20, 33, 44, 51, 60, 75) nach einem der vorhergehenden Ansprüche versehen sind, und
einem abnehmbaren Folienmaterial (34), das so angeordnet ist, dass es wenigstens die Seiten des mit Seitenplane versehenen Transportfahrzeugs in einer geschlossenen Position abdeckt,
wobei der Abstand zwischen benachbarten vertikalen Pfosten an die Breite des Paneels angepasst ist,
wobei das Paneel so dimensioniert oder mit Aussparungen (27, 54, 73) versehen ist, dass zum manuellen Platzieren oder Entfernen des Paneels ein Greifraum zwischen einer Seite des Paneels und dem Pfosten des mit Seitenplane versehenen Transportfahrzeugs gelassen ist.

12. Mit Seitenplane versehenes Transportfahrzeug nach Anspruch 11, wobei die Pfosten mit Führungen (71, 72, 73) versehen sind, um ein Seitenpaneel zu einer vorbestimmten Position hin zu schieben.

13. Mit Seitenplane versehenes Transportfahrzeug nach Anspruch 11 oder 12, wobei die Befestigungseinrichtungen im Wesentlichen U-förmige Schlitze (23, 24) umfassen, die zur Anbringung einer horizontalen Stange oder einer vertikalen Seite einer Seitenabdeckung geeignet sind.

14. Mit Seitenplane versehenes Transportfahrzeug nach einem der Ansprüche, wobei die Befestigungseinrichtungen so angeordnet sind, dass sie zwischen einer unteren Unterseite des Seitenpaneels und dem horizontalen Boden einen vertikalen Raum von mindestens 15 cm, vorzugsweise mindestens 25 cm, lassen.

15. Verfahren zum Beladen oder Entladen eines mit Seitenplane versehenen Transportfahrzeugs (40) nach einem der Ansprüche 11 bis 14, mit den folgenden Schritten:
- Bereitstellen eines mit Seitenplane versehenen Transportfahrzeugs (40), das einen horizontalen Boden (22, 31, 42, 74) zum Tragen von Last und vertikale Pfosten aufweist, die an den Seiten des Bodens positioniert sind,
- Laden oder Entladen von Gegenständen auf den Boden,
- Befestigen eines oder mehrerer Seitenpaneele (2, 20, 33, 44, 51, 60, 75) nach einem der vorhergehenden Ansprüche 1 bis 10 zwischen benachbarten Pfosten, und
Abdecken wenigstens der vertikalen Pfosten (21, 41, 65, 70) und der an den Pfosten befestigten Seitenpaneele mit einem abnehmbaren Folienmaterial (34),
wobei der Abstand zwischen benachbarten vertikalen Pfosten an die Breite des Paneels angepasst ist,
wobei das Paneel so dimensioniert oder mit Aussparungen (27, 54, 73) versehen ist, dass zum manuellen Platzieren oder Entfernen des Paneels ein Greifraum zwischen einer Seite des Paneels und dem Pfosten des mit Seitenplane versehenen Transportfahrzeugs gelassen ist.

## Revendications

1. Construction de panneau latéral (1) pour un véhicule de transport avec une bâche latérale, comprenant un panneau (2, 20, 33, 44, 51, 60, 75), le panneau étant doté de moyens de couplage (3, 4, 25, 26, 52, 53, 61, 63) au niveau de côtés opposés du panneau pour coupler de façon libérable le panneau entre deux montants adjacents (21, 41, 65, 70) du véhicule de transport avec une bâche latérale, **caractérisé en ce que**
le panneau a un poids de moins de 25 kilogrammes,
dans lequel le panneau est dimensionné ou doté d'évidements (27, 54, 76) pour laisser un espace de préhension entre un côté du panneau et le montant du véhicule de transport avec une bâche latérale pour le placement ou l'enlèvement manuel du panneau.

2. Construction de panneau latéral selon la revendication 1, dans laquelle l'espace de préhension est défini par des évidements disposés au niveau de côtés verticaux du panneau.

3. Panneau latéral selon la revendication 1 ou 2, dans lequel le panneau est essentiellement constitué d'un matériau sandwich de poids léger (1, 6, 7, 8, 10).

4. Panneau latéral selon la revendication 3, dans lequel le matériau sandwich comprend une feuille interne (6) et une feuille externe (7) séparées par un espace d'air, dans lequel les feuilles interne et externe sont reliées par des éléments de pontage (8) agencés dans l'espace d'air.

5. Panneau latéral selon la revendication 4, dans lequel les éléments de pontage comprennent une structure alvéolaire (10).

6. Panneau latéral selon l'une quelconque des revendications précédentes, dans lequel le panneau a une densité inférieure à 3 500 g/m², de préférence de 1 000 à 3 000 g/m².

7. Panneau latéral selon l'une quelconque des revendications précédentes, dans lequel le panneau a une superficie de moins de 7 m².

8. Panneau latéral selon l'une quelconque des revendications précédentes, dans lequel le panneau a une épaisseur d'au moins 5 mm, de préférence de 8 à 12 mm, de manière préférée entre toutes de 10 mm.

9. Panneau latéral selon l'une quelconque des revendications précédentes, dans lequel le panneau est essentiellement constitué d'un matériau de feuille thermoplastique, de préférence choisi parmi le polyéthylène, le polypropylène, le polystyrène ou les copolymères de ceux-ci, de manière préférée entre toutes le polypropylène.

10. Panneau latéral selon l'une quelconque des revendications précédentes, dans lequel au moins un côté inférieur du panneau est doté d'au moins un élément de renforcement (55, 77).

11. Véhicule de transport avec une bâche latérale (40) adapté pour utiliser un panneau latéral (1) selon l'une quelconque des revendications précédentes, comprenant
un plancher horizontal (22, 31, 42, 74) destiné à porter une charge,
des montants verticaux (21, 41, 65, 70) positionnés sur les côtés du plancher dotés de moyens de fixation pour fixer des panneaux latéraux (2, 20, 33, 44, 51, 60, 75) selon l'une quelconque des revendications précédentes, et
un matériau de feuille amovible (34) agencé pour couvrir au moins les côtés du véhicule de transport avec une bâche latérale en position fermée,
dans lequel la distance entre des montants verticaux adjacents est adaptée à la largeur du panneau,
dans lequel le panneau est dimensionné ou doté d'évidements (27, 54, 73) pour laisser un espace de préhension entre un côté du panneau et le montant du véhicule de transport avec une bâche latérale pour le placement ou l'enlèvement manuel du panneau.

12. Véhicule de transport avec une bâche latérale selon la revendication 11, dans lequel les montants sont dotés de guides (71, 72, 73) pour faire coulisser un panneau latéral vers une position prédéterminée.

13. Véhicule de transport avec une bâche latérale selon la revendication 11 ou 12, dans lequel les moyens de fixation comprennent essentiellement des fentes en forme de U (23, 24) appropriées pour s'ajuster sur une barre horizontale ou un côté vertical d'une couverture latérale.

14. Véhicule de transport avec une bâche latérale selon l'une quelconque des revendications précédentes, dans lequel les moyens de fixation sont agencés pour laisser un espace vertical d'au moins 15 cm, de préférence d'au moins 25 cm, entre une partie basse inférieure du panneau latéral et le plancher horizontal.

15. Procédé de chargement ou déchargement d'un véhicule de transport avec une bâche latérale (40) selon l'une quelconque des revendications 11 à 14, comprenant les étapes de :
- fourniture d'un véhicule de transport avec une bâche latérale (40) ayant un plancher horizontal (22, 31, 42, 74) pour porter une charge, et des montants verticaux positionnés sur les côtés du plancher,
- chargement ou déchargement d'articles sur le plancher,
- fixation d'un ou plusieurs panneaux latéraux (2, 20, 33, 44, 51, 60, 75) selon l'une quelconque des revendications précédentes 1 à 10 entre des montants adjacents, et
couverture au moins des montants verticaux (21, 41, 65, 70) et de panneaux latéraux fixés aux montants avec un matériau de feuille amovible (34),
dans lequel la distance entre des montants verticaux adjacents est adaptée à la largeur du panneau,
dans lequel le panneau est dimensionné ou doté d'évidements (27, 54, 73) pour laisser un espace de préhension entre un côté du panneau et le montant du véhicule de transport avec une bâche latérale pour le placement ou l'enlèvement manuel du panneau.
